# FASCICULE DE BREVET EUROPEEN

(11) **EP 1 527 599 B1**
(45) Date de publication et mention de la délivrance du brevet: **07.07.2010**
(21) Numéro de dépôt: 03755656.0
(22) Date de dépôt: 21.07.2003
(51) Int. Cl.: H04N 5/44, H04N 5/262, H04N 5/272

(54) **PROCEDE ET SYSTEME PERMETTANT A UN UTILISATEUR DE MELANGER EN TEMPS REEL DES IMAGES DE SYNTHESE AVEC DES IMAGES VIDEO**
VERFAHREN UND SYSTEM ZUR ECHT-ZEIT MISCHUNG VON SYNTHESEBILDERN UND VIDEOBILDERN
METHOD AND SYSTEM ENABLING REAL TIME MIXING OF SYNTHETIC IMAGES AND VIDEO IMAGES BY A USER

(30) Priorité: 24.07.2002 FR 0209401
(43) Date de publication de la demande: 04.05.2005
(73) Titulaire: Total Immersion, 92150 Suresnes (FR)
(72) Inventeur: LEFEVRE, Valentin, F-92800 Puteaux (FR)
(74) Mandataire: Quantin, Bruno Marie Henri
(86) Numéro de dépôt international: PCT/FR2003/050019
(87) Numéro de publication internationale: WO 2004/012445

(56) Documents cités:
- WO-A-00/30040
- US-A- 5 227 863

## Description

### Préambule de la description

### Domaine concerné, problème posé

La présente invention concerne un procédé et un système permettant à un utilisateur de mélanger en temps réel des images de synthèse avec des images vidéo.

### Problème posé

L'invention a plus précisément pour objet un procédé et un système permettant à un utilisateur :
(i) de produire dans une unité de traitement informatique, composée de circuits électroniques standard, un flux d'images de synthèse, et
(ii) de tracer une scène en créant des interactions visuelles entre le flux d'images de synthèse et au moins un flux d'images vidéo.

La solution à ce problème apportée par l'invention permet d'améliorer la qualité de la scène et de diminuer le temps de traitement, sans mettre en oeuvre des unités de traitement informatique propriétaires et coûteuses.

### Art antérieur

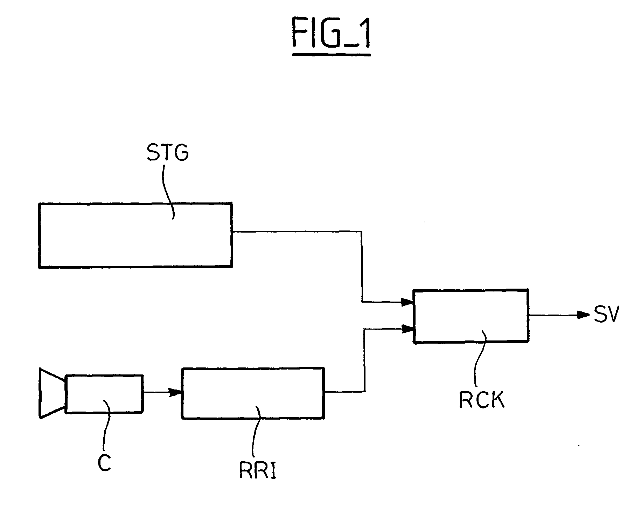

On a représenté sur la figure 1 un équipement selon l'art antérieur permettant de faire de la réalité améliorée. Cet équipement comprend :
- une Station de travail graphique STG,
- un Rack de type « chroma keyer » RCK,
- un Rack de type « retard d'image » RRI.

Les légendes C et SV désignent respectivement une caméra et une sortie vidéo.

La station de travail graphique STG est utilisée pour la génération des images de synthèse uniquement. La station de travail graphique STG est développée spécifiquement ou est une station Silicon Graphics^{™}. Les images de synthèse sont générées sur un fond de couleur uniforme (couleur clé).

Le Rack de type « chroma keyer » RCK est utilisé pour le mixage de l'image vidéo de la caméra (C) avec l'image de synthèse générée par la station graphique STG. La couleur clé est remplacée par l'image vidéo.

Le Rack de type « retard d'image » RRI est utilisé pour compenser le temps de traitement du générateur d'images.

Inconvénients de la technologie antérieure :
Les équipements selon l'art antérieur présentent des inconvénients en terme de prix et des qualités d'image et de fonctionnalité.

### Inconvénients en terme de prix :

Le prix de revient des équipements selon l'art antérieur est très élevé. En effet, le Rack « retard d'image » RRI est un rack professionnel, le Rack « chroma keyer » RCK est un rack professionnel, la station graphique STG est une station professionnelle. La solution antérieure selon l'art antérieur n'est pas embarquable (elle est composée de trois modules séparés : générateur d'images / retard d'images / chroma key).

### Inconvénients en termes de qualité d'image et de fonctionnalités :

L'interactivité visuelle entre la vidéo et les images de synthèse est limitée. En effet, en sortie du « chroma keyer » RCK la vidéo est insérée à la place de la couleur clé. Il n'est pas possible d'avoir des réflexions de la vidéo sur les images de synthèse ou le contraire. La vidéo ne peut pas être traitée comme une texture. Par exemple, il ne peut pas y avoir d'effet de reflets entre les images réelles (images vidéo) et les objets de synthèse. Le principe même du « chroma key » peut produire des artefacts ; il limite le choix dans la palette de couleurs des images de synthèse, et rend problématique le rendu d'objets de synthèse présentant des transparences.

Les performances des stations graphiques spécifiques sont vite dépassées par les performances des cartes graphiques grand public qui sont toujours plus puissantes (puissance graphique du matériel grand public multipliée par deux tous les six mois environ).

La solution antérieure est chère en termes de maintenance (les trois appareils qui la composent impliquent un contrat de maintenance spécifique).

La solution antérieure ne peut pas fonctionner sur un ordinateur portable, elle n'est pas mobile.

La solution antérieure est contraignante en termes de temps de réglages de tous ses éléments.

Aucun traitement sur l'image vidéo n'est possible :
- on ne peut pas utiliser la vidéo pour texturer localement un élément de la scène virtuelle,
- on ne peut pas déformer la vidéo (par exemple la correction des distorsions optiques est impossible),
- on ne peut pas faire de traitement sur la vidéo (par exemple pour le traitement du type chroma key).

### Solution

### Procédé

L'unité de traitement informatique selon l'invention, notamment de type "ordinateur PC" grand public comprend :
- une carte mère,
- une carte graphique de rendu et d'affichage de la scène.

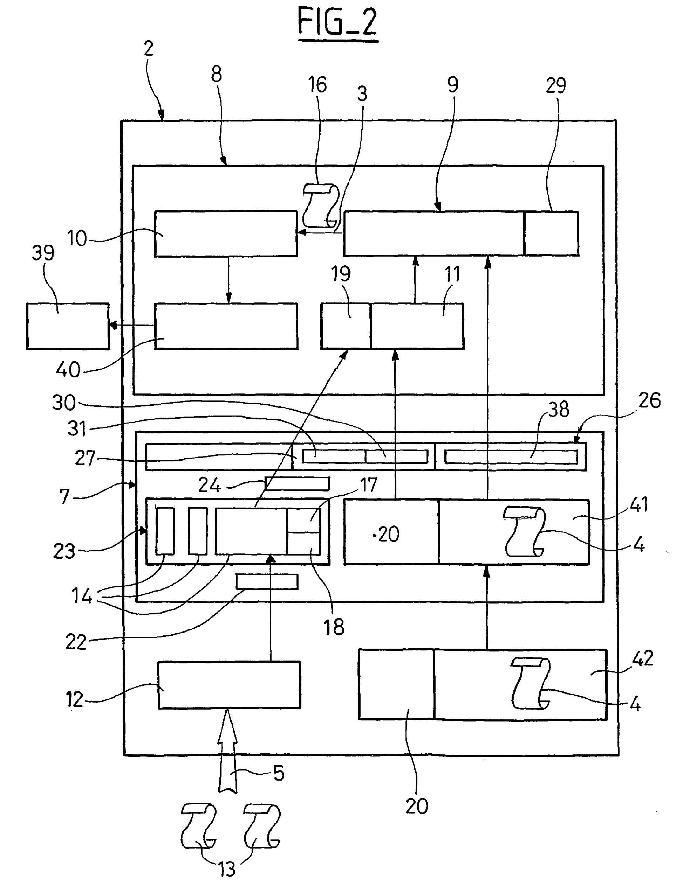

La notion de scène au sens de la présente invention est ci-après explicitée en se référant à la figure 2

La carte graphique de rendu et d'affichage de la scène comporte un processeur d'accélération des traitements 2D/3D, un buffer de travail « back buffer » et une mémoire de texture.

L'équipement informatique comprend également un moyen d'acquisition permettant d'acquérir, en temps réel, des images vidéo, dans un buffer vidéo. Le moyen d'acquisition se présente notamment sous la forme :
* d'une acquisition vidéo intégrée à la carte graphique, et/ou
* d'une acquisition vidéo intégrée à la carte mère, et/ou
* d'une acquisition vidéo, via une carte d'acquisition dédiée (par exemple une carte de marque Pinnacle ^{™} connue sous le nom de PCTV).

Le procédé selon l'invention comprend l'étape d'effectuer un rendu spécifique de la scène,
- en recopiant, lors de chaque rendu de la scène, le buffer vidéo dans une zone mémoire de la carte graphique,
- en traçant les images de synthèse dans ledit buffer de travail de la carte graphique.

Pour effectuer un rendu spécifique, le procédé comprend une étape d'initialisation préalable au rendu spécifique consistant à créer une texture dédiée dans la mémoire de texture de la carte graphique. La texture dédiée a la taille du buffer vidéo. La texture est dédiée pour recopier le buffer vidéo dans la mémoire texture.

Le procédé comprend en outre :
- l'étape de recopier le buffer vidéo dans la texture dédiée,
- l'étape de tracer complètement la scène, en utilisant la texture dédiée pour texturer certains des polygones de la scène.

Lorsque le buffer vidéo comporte des lignes vidéo entrelacées, pour recopier lors de chaque rendu de la scène le buffer vidéo dans la texture dédiée, de préférence selon l'invention, le procédé comprend :
- l'étape de recopier les lignes vidéo paires, lors d'un premier rendu, puis
- l'étape de recopier les lignes vidéo impaires, lors du rendu suivant,
- l'étape d'appliquer une translation du buffer vidéo de plus ou moins une demi-ligne dans le rendu de la scène.

Cette translation du buffer vidéo est réalisée :
- soit en modifiant les coordonnées de texture de la texture dédiée,
- soit en modifiant les coordonnées des polygones texturés par la texture dédiée.

On améliore ainsi la qualité d'image.

Il est possible de recopier le buffer vidéo dans la zone mémoire de la carte graphique en procédant de deux manières différentes.

Dans le cas d'une première façon de procéder le moyen d'acquisition comporte un driver présentant un nouveau buffer vidéo pour chaque nouvelle image vidéo. De préférence selon l'invention, dans le cas de cette première manière de procéder, le rendu de la scène est effectué de manière synchrone avec la présentation de chaque nouveau buffer vidéo.

Dans le cas d'une deuxième façon de procéder le moyen d'acquisition comporte également un driver présentant un nouveau buffer vidéo pour chaque nouvelle image vidéo. Toutefois, dans le cas de cette deuxième manière de procéder, de préférence selon l'invention le procédé comprend les étapes suivantes :
- l'étape de remplir une mémoire tampon avec chaque nouveau buffer vidéo, en mettant en oeuvre une unité d'exécution (« thread ») de capture vidéo,
- l'étape de recopier un des buffer vidéo contenu dans la mémoire tampon vers la mémoire de texture de la carte graphique,
- l'étape d'effectuer le rendu de la scène de manière asynchrone par rapport à la présentation de chaque nouveau buffer vidéo.

Le procédé selon l'invention permet des fonctionnalités graphiques améliorées lors du tracé d'une scène mélangeant une image vidéo avec une image de synthèse.

### Anti-aliasing

De préférence selon l'invention, le procédé comprend l'étape d'appliquer une fonction anti-aliasing lors du tracé de la scène. Les notions de fonction anti-aliasing ont été décrites ci-après.

### Transparence

De préférence selon l'invention, le procédé comprend l'étape d'appliquer une fonction transparence lors du tracé de la scène. Les notions de fonction transparence ont été décrites ci-après.

### Correction des distorsions optiques

De préférence selon l'invention, le procédé comprend l'étape d'appliquer des déformations non linéaires au buffer vidéo en texturant des polygones de la scène au moyen de la texture dédiée.

Il est ainsi possible de corriger des distorsions optiques de l'image vidéo.

### Traitement temps réel d'images vidéo

De préférence selon l'invention, le procédé comprend l'étape d'appliquer au buffer vidéo des fonctions pixel shaders permettant, notamment, un traitement du type chroma key. Les notions de fonction pixel shaders et de traitement de type chroma key ont été décrites ci-après.

### Environment mapping

De préférence selon l'invention, l'unité de traitement informatique comprend deux moyens d'acquisition ayant chacun un buffer vidéo. Le procédé comprend les étapes suivantes :
- l'étape de recopier le buffer vidéo de l'un des moyens d'acquisition dans une seconde texture dédiée de la carte graphique,
- l'étape de texturer au moins en partie la scène en utilisant la seconde texture dédiée.

Il est ainsi possible d'obtenir des reflets réels sur des objets de synthèse.

### Délai vidéo

De préférence selon l'invention, le procédé comprend l'étape de retarder la recopie d'un des buffer vidéo contenu dans une mémoire tampon vers la mémoire de texture de la carte graphique.

Il est ainsi possible de retarder l'affichage des images vidéo par rapport à l'affichage des images de synthèse.

### Système

L'invention concerne également un système permettant à un utilisateur :
(i) de produire dans une unité de traitement informatique, composée de circuits électroniques standard, un flux d'images de synthèse, et
(ii) de tracer une scène en créant des interactions visuelles entre le flux d'images de synthèse et au moins un flux d'images vidéo,

La solution à ce problème permet d'améliorer la qualité de la scène et de diminuer le temps de traitement, sans mettre en oeuvre des unités de traitement informatique propriétaires et coûteuses.

L'unité de traitement informatique selon l'invention comprend un équipement informatique, notamment de type "ordinateur PC" grand public. Cet équipement informatique comporte :
- une carte mère,
- une carte graphique de rendu et d'affichage de la scène.

La carte graphique de rendu et d'affichage comporte un processeur d'accélération des traitements 2D/3D, un buffer de travail « back buffer » et une mémoire de texture.

L'équipement informatique comporte un moyen d'acquisition permettant d'acquérir, en temps réel, des images vidéo, dans un buffer vidéo. Le moyen d'acquisition se présente notamment sous la forme :
- d'une acquisition vidéo intégrée à la carte graphique, et/ou
- d'une acquisition vidéo intégrée à la carte mère, et/ou
- d'une acquisition vidéo, via une carte d'acquisition dédiée.

Pour effectuer un rendu spécifique de la scène :
- la carte mère comporte en outre des moyens de traitement informatique permettant de recopier, lors de chaque rendu de la scène, le buffer vidéo dans une zone mémoire de la carte graphique,
- le processeur d'accélération des traitements 2D/3D comporte des moyens de traçage pour tracer les images de synthèse dans une zone mémoire de la carte graphique.

Pour effectuer un rendu spécifique, les moyens de traitement informatique comprennent des moyens d'initialisation créant, préalablement au rendu spécifique, une texture dédiée dans la mémoire de texture de la carte graphique. La texture dédiée a la taille du buffer vidéo. Les moyens de traitement informatique comprennent en outre des premiers moyens de recopie pour recopier le buffer vidéo dans la texture dédiée,
- le processeur d'accélération des traitements 2D/3D comprend des premiers moyens de calcul pour tracer complètement la scène, en utilisant la texture dédiée pour texturer certains des polygones de la scène.

Lorsque le buffer vidéo comporte des lignes vidéo entrelacées, de préférence selon l'invention, les premiers moyens de recopie du buffer vidéo dans la texture dédiée comprennent :
- des premiers moyens de sélection et de recopie des lignes vidéo paires, lors d'un premier rendu, puis
- des seconds moyens de sélection et de recopie des lignes vidéo impaires, lors du rendu suivant.

Le processeur d'accélération des traitements 2D/3D comprend des seconds moyens de calcul pour appliquer une translation du buffer vidéo de plus ou moins une demi-ligne dans le rendu de la scène.

Cette translation du buffer vidéo est réalisée :
- soit en modifiant les coordonnées de texture de la texture dédiée,
- soit en modifiant les coordonnées des polygones texturés par la texture dédiée.

On améliore ainsi la qualité d'image. Il est possible de recopier le buffer vidéo de deux manières différentes.

Dans le cas de la première façon de procéder, le moyen d'acquisition comporte un driver présentant un nouveau buffer vidéo pour chaque nouvelle image vidéo. De préférence selon l'invention, dans le cas de cette première façon de procéder, les moyens de traitement informatique effectuent le rendu de la scène de manière synchrone avec la présentation de chaque nouveau buffer vidéo.

Dans le cas d'une deuxième façon de procéder, le moyen d'acquisition comporte un driver présentant un nouveau buffer vidéo pour chaque nouvelle image vidéo. De préférence selon l'invention, dans le cas de cette deuxième façon de procéder, lesdits moyens de traitement informatique comprennent :
- des moyens de transfert pour remplir une mémoire tampon avec chaque nouveau buffer vidéo, en mettant en oeuvre une unité d'exécution (« thread ») de capture vidéo,
- des seconds moyens de recopie pour recopier un des buffer vidéo contenu dans ladite mémoire tampon vers la mémoire de texture de la carte graphique.

Les moyens de traitement informatique effectuent le rendu de ladite scène de manière asynchrone par rapport à la présentation de chaque nouveau buffer vidéo.

Le système selon l'invention permet des fonctionnalités graphiques améliorées lors du tracé d'une scène mélangeant une image vidéo avec une image de synthèse.

### Anti-aliasing

De préférence selon l'invention, les moyens de traitement informatique permettent d'appliquer une fonction anti-aliasing lors du tracé de la scène.

### Transparence

De préférence selon l'invention, les moyens de traitement informatique permettent d'appliquer une fonction transparence lors du tracé de la scène.

### Correction des distorsions optiques

De préférence selon l'invention, les moyens de traitement informatique permettent d'appliquer des déformations non linéaires au buffer vidéo en texturant des polygones de la scène au moyen de la texture dédiée.

Il est ainsi possible de corriger des distorsions optiques de l'image vidéo.

### Traitement temps réel d'images vidéo

De préférence selon l'invention, les moyens de traitement informatique permettent d'appliquer au buffer vidéo des fonctions pixel shaders permettant, notamment, un traitement du type chroma key.

### Environment mapping

De préférence selon l'invention, l'unité de traitement informatique comprend deux moyens d'acquisition ayant chacun un buffer vidéo. Les moyens de traitement informatique permettent de recopier le buffer vidéo de l'un des moyens d'acquisition dans une seconde texture dédiée de la carte graphique.

Le processeur d'accélération des traitements 2D/3D permet de texturer au moins en partie la scène en utilisant la seconde texture dédiée.

Il est ainsi possible d'obtenir des reflets réels sur des objets de synthèse.

### Délai vidéo

De préférence selon l'invention, les moyens de traitement informatique permettent de retarder la recopie d'un des buffer vidéo contenu dans une mémoire tampon vers la mémoire de texture de la carte graphique.

Il est ainsi possible de retarder l'affichage des images vidéo par rapport à l'affichage des images de synthèse.

### Description détaillée

D'autres caractéristiques et avantages de l'invention apparaîtront à la lecture de la description d'une variante de réalisation de l'invention donnée à titre d'exemple indicatif et non limitatif, et de la
- figure 1 qui représente, un équipement selon l'art antérieur permettant de faire de la réalité améliorée,
- figure 2 qui représente un schéma d'ensemble d'une variante de réalisation d'un système selon l'invention,
- figure 3 qui représente, de manière schématique, les moyens de traitement informatique 26 dans le cas d'une autre variante de réalisation,
- figure 4 qui représente, de manière schématique, le processeur d'accélération des traitements 2D/3D 9 dans le cas de la variante de réalisation représentée sur la figure 3,
- figure 5 qui représente, de manière schématique, une variante de réalisation dans le cas ou le moyen d'acquisition 12 se présente sous la forme d'une acquisition vidéo intégrée à la carte graphique 8,
- figure 6 qui représente, de manière schématique, une variante de réalisation dans le cas ou le moyen d'acquisition 12 se présente sous la forme d'une acquisition vidéo intégrée à la carte mère 7,
- figure 7 qui représente, de manière schématique, une variante de réalisation dans le cas ou le moyen d'acquisition 12 se présente sous la forme d'une acquisition vidéo via une carte d'acquisition dédiée,
- figure 8 qui représente, de manière schématique, l'algorithme de recopie du buffer vidéo 14 dans le buffer de sortie vidéo (back buffer) 40 de la carte graphique,
- figure 9 qui représente, de manière schématique, l'algorithme de recopie du buffer vidéo 14 dans la mémoire de texture 11 de la carte graphique.

On a précédemment décrit la figure 1 lors de la présentation de l'art antérieur. On va maintenant décrire la figure 2 qui représente un schéma d'ensemble d'une variante de réalisation d'un système selon l'invention.

Sur la figure 2 on a représenté une unité de traitement informatique 2 comprenant :
- une carte graphique 8,
- une carte mère 7,
- des moyens d'acquisition 12 recevant un flux 5 d'images vidéo 13,
- un disque dur 42 contenant une scène 4,

La carte graphique 8 comprend :
- un processeur d'accélération des traitements 2D/3D 9 comprenant des premiers moyens de calcul 29,
- un buffer de travail 10 recevant un flux 3 d'images de synthèse 16 du processeur d'accélération des traitements 2D/3D 9,
- une mémoire de texture 11 comprenant une texture dédiée 19,
- une sortie vidéo 39,
- un buffer de sortie vidéo (back buffer) 40.

La carte mère 7 comprend :
- des moyens de traitement informatique 26 comprenant des premiers moyens de recopie 27 comportant des premiers moyens de sélection et de recopie 30, des seconds moyens de sélection et de recopie 31,
- une mémoire centrale 41 contenant une scène 4 et des polygones 20,
- une mémoire tampon 23 comprenant des buffer vidéo 14 comportant des lignes vidéo paires 17 et des lignes vidéo impaires 18,
- un driver 22,
- une unité d'exécution 24.

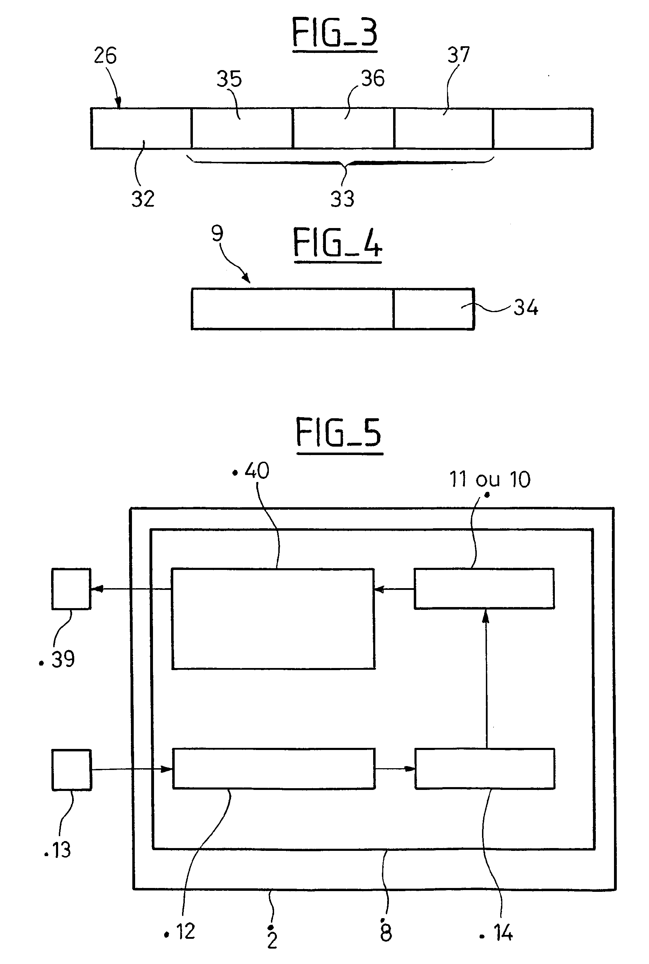

Dans une autre variante de réalisation, les moyens de traitement informatique 26 comprennent des moyens d'initialisation 32, des seconds moyens de recopie 33 comportant des troisièmes moyens de sélection et de recopie 35, des quatrièmes moyens de sélection et de recopie 35 (voir figure 3). Dans le cas de cette variante de réalisation, le processeur d'accélération des traitements 2D/3D 9 comprend des seconds moyens de calcul 34 (voir figure 4).

Le moyen d'acquisition 12 numérise le signal vidéo 13 correspondant aux images vidéo du flux 5 (le signal vidéo peut être à la norme analogique ou numérique). La carte mère reçoit ce flux numérisé dans un buffer vidéo 14 composé de pixels et stocké dans sa mémoire. Dans la description, le buffer vidéo 14 est aussi appelé buffer de pixels.

Une scène 3D 4 est un ensemble d'éléments
- d'objets 3D composés de textures (image 2D) et de polygones 20 (géométrie 3D).
- de sources de lumières.
- de caméras virtuelles.

La scène 3D 4 est stockée sur le disque dur 42 et est recopiée dans la mémoire centrale 41 de la carte mère 7.

Pour calculer une image de synthèse 16, la carte mère 7 copie le buffer vidéo 14 et les textures de la scène 3D dans la mémoire de texture 11 de la carte graphique 8 et envoie à celle-ci l'ensemble des polygones 20 à afficher, les sources de lumières, la caméra. Les circuits spécialisés (le processeur d'accélération des traitements 2D/3D 9) calculent à partir de ces données 3D une image 2D dans le buffer de travail 10 (back buffer). Le contenu du buffer de travail 10 et ensuite transféré dans le buffer de sortie vidéo 40 (front buffer) et la sortie vidéo 39 pour être utilisé par le dispositif d'affichage (télévision, moniteur, projecteur) pour afficher l'image.

Le buffer vidéo 14 est recopié dans la texture dédiée 19 de la mémoire de la texture 11. La texture dédiée 19 faisant partie de la scène, il est possible d'afficher sont contenu en fonction des besoins de l'utilisateur. On citera, à titre d'exemples non exhaustifs, les affichages suivants :
- Affichage de la texture dédiée 19 en arrière plan pour obtenir une vidéo « plein écran ».
- Affichage de la texture dédiée 19 sur un objet de synthèse inclus dans la scène 4, pour enrichir celui-ci par une vidéo en temps réel.

La texturation est une technique qui consiste à dessiner un polygone 20 en 3D avec une texture (image 2D) plaquée dessus. A cet effet, on affecte à chaque sommet 3D d'un polygone 20 des coordonnées 2D (coordonnées de texture) dans la texture. Il est possible d'utiliser plusieurs textures sur un même polygone 20. On associe aux sommets un jeu de coordonnées de texture pour chaque texture.

Le texturation peut être effectuée avec tout type d'image 2D donc avec le buffer vidéo 14 qui est une image 2D. Un ensemble de polygones 20, texturé avec le buffer vidéo 14, est traité comme n'importe quel objet intervenant dans le calcul de l'image de synthèse 16.

On va maintenant décrire la figure 5 qui représente, de manière schématique, une variante de réalisation dans le cas ou le moyen d'acquisition 12 se présente sous la forme d'une acquisition vidéo intégrée à la carte graphique 8.

L'unité de traitement informatique 2 contient une carte graphique 8 équipée d'un moyen d'acquisition 12. L'image vidéo 13 est acquise en temps réel par le moyen d'acquisition 12 puis recopiée dans le buffer vidéo 14. Le buffer vidéo 14 est ensuite recopié de deux manières possibles :
- soit vers le buffer de travail 10,
- soit vers la mémoire de texture 11.

Après cette recopie, le processeur d'accélération des traitements 2D/3D 9 effectue un rendu de la scène 4 dans le buffer de travail 10. Le buffer de travail 10 est transféré dans le buffer de sortie vidéo 40 qui permet de mettre à jour la sortie vidéo 39.

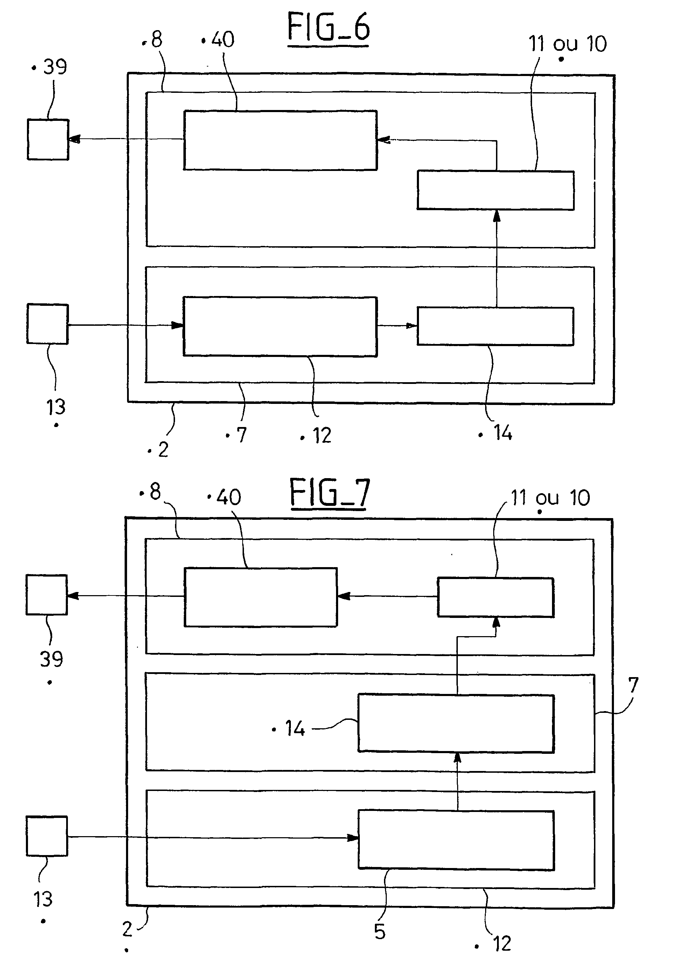

On va maintenant décrire la figure 6 qui représente, de manière schématique, une variante de réalisation dans le cas ou le moyen d'acquisition 12 se présente sous la forme d'une acquisition vidéo intégrée à la carte mère 7.

L'unité de traitement informatique 2 contient une carte mère 7 équipée d'un moyen d'acquisition 12. L'unité de traitement informatique 2 contient également une carte graphique 8. L'image vidéo 13 est acquise en temps réel par le moyen d'acquisition 12 puis recopiée dans le buffer vidéo 14. Le buffer vidéo 14 est ensuite recopié de deux manières possibles :
- soit vers le buffer de travail 10,
- soit vers la mémoire de texture 11.

Après cette recopie, le processeur d'accélération des traitements 2D/3D 9 effectue un rendu de la scène 4 dans le buffer de travail 10. Le buffer de travail 10 est transféré dans le buffer de sortie vidéo 40 qui permet de mettre à jour la sortie vidéo 39.

On va maintenant décrire la figure 7 qui représente, de manière schématique, une variante de réalisation dans le cas où le moyen d'acquisition 12 se présente sous la forme d'une acquisition vidéo via une carte d'acquisition dédiée.

L'unité de traitement informatique 2 contient un moyen d'acquisition 12 sous la forme d'une carte d'acquisition branchée à la carte mère 7 (par exemple une carte PCTV de marque Pinnacle ™). L'unité de traitement informatique 2 contient également une carte graphique 8. L'image vidéo 13 est acquise en temps réel par le moyen d'acquisition 12 puis recopiée dans le buffer vidéo 14. Le buffer vidéo 14 est ensuite recopié de deux manières possibles :
- soit vers le buffer de travail 10,
- soit vers la mémoire de texture 11.

Après cette recopie, le processeur d'accélération des traitements 2D/3D 9 de la carte graphique effectue un rendu de la scène 4 dans le buffer de travail 10. Le buffer de travail 10 est transféré dans le buffer de sortie vidéo 40 qui permet de mettre à jour la sortie vidéo 39.

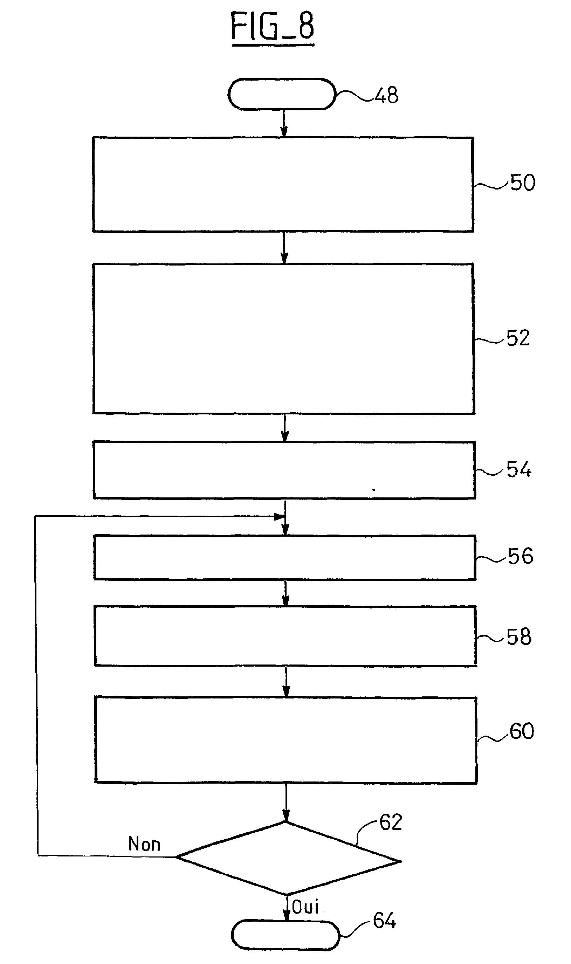

On va maintenant décrire la figure 8 qui représente, de manière schématique sous forme de blocs, l'algorithme de recopie du buffer vidéo 14 dans le buffer de sortie vidéo (back buffer) 40 de la carte graphique. Les blocs ont la signification suivante :
Bloc 48 :
   DEPART.
Bloc 50 :
   Initialisation du moyen d'acquisition 12 :
      Passage en mode acquisition.
   Définition de l'entrée vidéo (ex : Svideo/PAL/NTSC).
   Démarrage de l'acquisition vidéo.
Bloc 52 :
   Initialisation du processeur d'accélération des traitements 2D/3D 9 :
      Définition du type de sortie (ex : sortie VGAou Pal ou NTSC ou DVI).
   Définition du mode graphique (plein écran ou fenêtré).
   Définition de la Résolution graphique (ex : 800 par 600 en 32bits par pixel).
   Définition du mode Zbuffer (init. Accélération 3D).
   Passage en mode double buffer (création du buffer de sortie vidéo 40 et du buffer de travail 10.)
Bloc 54 :
   Chargement de la scène 4 :
      Chargement de tous les modèles 3D à partir du disque dur 42.
Bloc 56 :
   RAZ du Zbuffer.
   RAZ du buffer de travail 10 (optionnel).
Bloc 58 :
   Copie du buffer vidéo 14 en provenance du moyen d'acquisition 12 dans le buffer de travail 10.
Bloc 60 :
   Tracé de la scène 4 dans le buffer de travail 10 effectué par le processeur d'accélération des traitements 2D/3D 9.
   Mise à jour du buffer de sortie vidéo 40,
Bloc 62 :
   Fin Programme ?
Bloc 64 :
   FIN.

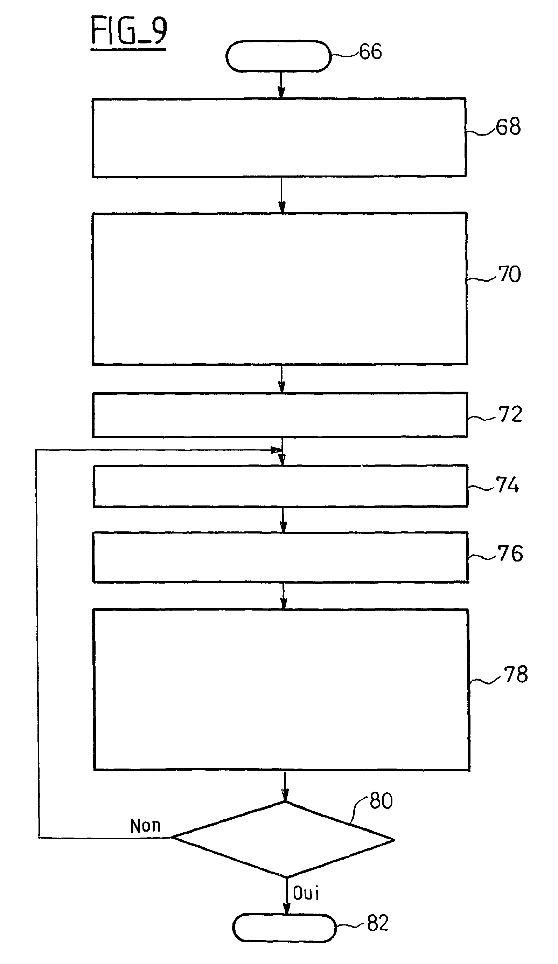

On va maintenant décrire la figure 9 qui représente, de manière schématique sous forme de blocs, l'algorithme de recopie du buffer vidéo 14 dans la mémoire de texture 11 de la carte graphique.

Les blocs ont la signification suivante :
Bloc 66 :
   DEPART.
Bloc 68 :
   Initialisation du moyen d'acquisition 12 :
      Passage en mode acquisition
   Définition de l'entrée vidéo (ex : Svideo/PAL/NTSC).
   Démarrage de l'acquisition vidéo
Bloc 70 :
   Initialisation du processeur d'accélération des traitements 2D/3D 9,
   Définition du type de sortie (ex : sortie VGA ou Pal ou NTSC ou DVI).
   Définition du mode graphique (plein écran ou fenêtré).
   Définition de la Résolution graphique (ex : 800 par 600 en 32bits par pixel).
   Définition du mode Zbuffer (init. Accélération 3D).
   Passage en mode double buffer (création du buffer de sortie vidéo 40 et du buffer de travail 10).
   Initialisation de la texture dédiée 19 (création de la texture dédiée 19 dans la mémoire de texture 11, la texture dédiée 19 au même nombre de lignes et de colonnes que le buffer vidéo 14 de capture vidéo).
Bloc 72 :
   Chargement de la scène 4,
   Chargement de tous les modèles 3D à partir du disque dur 42.
Bloc 74 :
   RAZ du Zbuffer.
   RAZ du buffer de travail (10) (optionnel).
Bloc 76 :
   Copie du buffer vidéo 14 en provenance du moyen d'acquisition 12 dans la texture dédiée 19 incluse dans la mémoire de texture 11.
Bloc 78 :
   Tracé de la scène 4 dans le buffer de travail 10,
   Exploitation des textures, y compris celles qui proviennent de l'acquisition vidéo selon toutes les utilisations qui peuvent être faites d'une texture (ex : environnement mapping, tracé dans le buffer de travail 10 comme fond d'écran, texturation d'objets de synthèse).
   Mise à jour du buffer de sortie vidéo 40 ;
Bloc 80 :
   Fin programme?
Bloc 82 :
   FIN.

### Description de l'anti-aliasing :

L'anti-aliasing est l'opération de filtrage qui permet d'atténuer les marches d'escalier sur les bords des polygones 20 dues à la résolution de calcul finie de l'image de synthèse 16.

Lorsque l'on applique l'anti-aliasing, la couleur des pixels sur les bords de l'objet en avant-plan est obtenue par une opération de filtrage entre les pixels de l'objet en arrière plan et les pixels de l'objet en avant-plan.

L'invention permet de traiter un objet texturé avec de la vidéo comme un élément de même nature que les autres objets de synthèse: les fonctions d'anti-aliasing s'appliquent donc pour le tracé de la scène totale.

### Description des effets de transparence :

Les objets de synthèse peuvent contenir des surfaces transparentes. Si un tel objet est en avant-plan par rapport à un objet en arrière plan texturé avec une vidéo, l'objet vidéo texturé sera vu au travers de ces surfaces.

### Description des déformations non linéaires :

Le procédé permet d'appliquer des déformations non linéaires à la vidéo, puisque celle-ci est stockée dans une texture mappée sur des polygones 20. Il est, notamment, ainsi possible de distordre en temps réel l'image vidéo pour corriger les distorsions optiques de la caméra vidéo. Les lignes aux bords de l'image qui apparaissent courbes peuvent être ainsi redressées en étirant la texture vidéo

A cet effet, on crée un maillage régulier de polygones 20 sur lequel on plaque une texture vidéo avec des coordonnées de textures qui décrivent une courbe lorsque les coordonnées des sommets associés évoluent linéairement.

### Description des traitements « pixels shaders » et notamment sur le « chroma key »

La couleur finale d'un pixel est une combinaison entre la couleur de ce même pixel pour le polygone 20 en cours de tracé et la couleur pour les polygones 20 déjà tracés. La couleur d'un pixel d'un polygone est une combinaison entre la valeur de ce pixel dans la ou les textures associées à ces polygones et l'éclairement du polygone.

Les cartes graphiques 8 actuelles utilisent un programme (pixel shader) pour effectuer cette combinaison. Ce programme est transféré dans la carte graphique 8 comme les autres objets 3D.

Le procédé selon l'invention permet d'appliquer les fonctionnalités, connues en soi, du type « pixel shaders » sur l'image vidéo. Cela permet notamment de mettre en oeuvre des algorithmes du type « chroma-key » sur le buffer vidéo 14 ou d'autres traitements d'images.

Le principe du chroma-key consiste à remplacer dans une image tous les points d'une couleur donnée par les points d'une autre source vidéo. On nomme parfois cette technique, l' « écran bleu ». On a décrit ci-après un algorithme simple de chroma-key. Pour chaque pixel de la vidéo :
- on calcule sa couleur dans l'espace YUV,
- on calcule la distance de cette couleur par rapport à une couleur de référence en ignorant la coordonnée Y (la luminance),
- si la distance est inférieure à un seuil prédéterminé, on rend le pixel transparent, sinon il est affiché normalement.

### Description de l'environnement mapping

L'environnement mapping est une technique qui simule des surfaces réfléchissantes sans utiliser le ray-tracing (inutilisable en temps réel). La technique applique une texture spéciale qui contient une image de la scène qui entoure l'objet sur l'objet lui-même. Le résultat obtenu est une approximation de l'apparence d'une surface réfléchissante, sans demander une puissance de calcul trop importante.

Le procédé selon l'invention, généralisé à l'utilisation de deux moyens d'acquisition 12 (deux cartes d'acquisition), permet d'utiliser un des deux moyens d'acquisition 12 (une des deux cartes d'acquisition) pour recopier le « buffer vidéo » 14 associé à cette carte dans la mémoire d'une texture 11 qui servira de mapping d'environnement lors du tracé des objets de la scène texturés avec cette texture. Cela permet notamment d'obtenir des reflets réels sur ces objets de synthèse.

L'autre carte d'acquisition est utilisée pour recopier son buffer vidéo 14 dans la mémoire d'une texture affichée en arrière plan des objets de synthèse sur lesquels on a les reflets.

### Description d'une mémoire tampon 23

La méthode de la mémoire tampon permet de retarder l'affichage des images vidéo.

N images vidéo sont stockées en mémoire.

La méthode de la mémoire tampon permet de retarder l'affichage des images vidéo. La mémoire tampon 23 fonctionne selon le principe suivant : la mémoire tampon 23 peut stocker N buffers vidéo 14. Ces buffers video 14 correspondent aux images vidéo 13 acquises par le moyen d'acquisition 12 lors des cycles N, (N-1), (N-2), (N-3), etc.... Lors du cycle N, le procédé peut décider d'utiliser le buffer vidéo 14 acquis au cycle (N-2), ce qui entraîne dans ce cas un retard des images vidéo affichées par la sortie vidéo 39 de 3 cycles. Dans le cas général, grâce à ce procédé, on peut introduire jusqu'à N images de retard.

### Avantages de la solution revendiquée par rapport à l'art antérieur :

On va maintenant exposer les avantages du procédé et du système selon l'invention par rapport à l'art antérieur :
- Le procédé et le système selon l'invention permettent une amélioration de la qualité des images : nombre de polygones, ombrage, texturation, transparence, réflexions, anti-aliasing.
- Le procédé et le système selon l'invention permettent de réaliser en temps réel des effets de vidéo texturation, c'est-à-dire la texturation d'objets de synthèse, non pas avec une simple image statique, mais avec une vidéo « live ».
- Le procédé et le système selon l'invention permettent de réaliser en temps réel des effets d' « environment mapping » dynamique, c'est-à-dire la possibilité d'entourer les objets de synthèse d'une carte d'environnement non pas statique, mais qui est la vidéo elle même. Cela ouvre la porte à des effets surprenants, en particuliers lorsque les objets de synthèse ont une surface réfléchissante comme un miroir.
- Le procédé et le système selon l'invention permettent de réaliser tout ce qu'il est possible de faire classiquement avec des textures statiques mais maintenant avec une ou plusieurs sources vidéo « live ».
- Le procédé et le système selon l'invention permettent d'effectuer un traitement des images vidéo par la technologie des pixels shaders (notamment traitement du type « chroma key »).
- Le procédé et le système selon l'invention permettent de retarder des images vidéo sans rack externe.
- Le procédé et le système selon l'invention permettent une diminution du temps de réponse du système car tous les traitements sont internes à la même machine (on ne cumule pas les temps de traitements de plusieurs unités de traitement comme dans l'art antérieur).
- Le procédé et le système selon l'invention permettent l'utilisation de matériels produits en grande quantité ayant un faible coût de revient.
- Le procédé et le système selon l'invention ne nécessitent pas de développements électroniques (hardware) propriétaire : il permettent utilisation de matériel standard « sur étagère » : il permettent une maintenance facilitée (cartes mère de technologie PC grand public, cartes graphiques grand public, cartes d'acquisition vidéo grand public).
- Le procédé et le système selon l'invention peuvent fonctionner avec un ordinateur unique (boîtier PC standard, ordinateur portable, rack PC industriel).
- Le procédé et le système selon l'invention peuvent fonctionner en temps réel : les images vidéo sont générées directement. Il est ainsi possible de supprimer les coûts de post-production (pas de temps de calcul de plusieurs heures pour quelques secondes d'images vidéo).
- Le procédé et le système selon l'invention peuvent être embarquées. Le procédé et le système selon l'invention peuvent fonctionner sur des cartes PC industrielles compactes (domaines militaires ou navigation ou zones à risques).
- Le procédé et le système selon l'invention peuvent fonctionner sur du matériel durci (pour industrie / militaire).
- Le procédé et le système selon l'invention peuvent suivre l'évolution des performances des cartes graphiques accélératrices avec un faible effort de mise à jour du logiciel : utilisation de librairies graphiques standard (DirectX ou OpenGL).
- Le procédé et le système selon l'invention peuvent être facilement déplacée (mobilité) avec une mise en oeuvre rapide sur le lieu d'utilisation.
- Le procédé et le système selon l'invention peuvent fonctionner sur un ordinateur portable équipé d'une entrée vidéo (ex : entrée DV).

Applications industrielles et commerciales du procédé et du système selon l'invention.

Applications industrielles dans le domaine de l'audiovisuel (cinéma / vidéo).

Le procédé et le système selon l'invention peuvent notamment être utilisés pour les productions audiovisuelles tournées en direct ou dans les conditions du direct :
- Plateaux virtuels temps réel (affichage de présentateurs dans un décors virtuel).
- Effets spéciaux temps réel (ex : particules, explosions, déformations temps réel).

Le procédé et le système selon l'invention peuvent notamment être utilisés dans le domaine de la publicité (ex : produits virtuels dans décors réels).

Le procédé et le système selon l'invention peuvent notamment être utilisés pour procéder à des ajouts d'objets virtuels dans une émission de télévision et pour réaliser des interactions avec un présentateur réel (talkshows, évènements sportifs, téléachat, informations, météo, émissions médicales).

Le procédé et le système selon l'invention peuvent notamment être utilisés pour réaliser des avatars : personnages virtuels incrustés en temps réel dans des décors réels.

Le procédé et le système selon l'invention peuvent notamment être utilisés pour réaliser des pré visualisations temps réel pour le cinéma (contrôle des effets spéciaux sur le lieu de tournage).

### Applications industrielles dans le domaine industriel

Le procédé et le système selon l'invention peuvent notamment être utilisés dans le domaine de fabrication (enrichissement d'images réelles pour guider les opérations manuelles et informer le constructeur lors de la fabrication).

Le procédé et le système selon l'invention peuvent notamment être utilisés dans le domaine de la maintenance (enrichissement d'images réelles avec des informations supplémentaires pour optimiser les coûts de maintenance, guide temps réel pour le dépannage).

Le procédé et le système selon l'invention peuvent notamment être utilisés dans le domaine militaire (cibles virtuelles, menace virtuelle, explosions, fantassins, véhicules).

Le procédé et le système selon l'invention peuvent notamment être utilisés dans le domaine des simulations (phénomènes atmosphériques ou environnementaux simulés mixés avec des décors réels, tests de prototypes virtuels, véhicules virtuels).

Le procédé et le système selon l'invention peuvent notamment être utilisés dans le domaine des jeux vidéo (joueurs réels visualisés dans un jeu vidéo, ou éléments virtuels tels que personnages, véhicules intégrés dans des images réelles).

Le procédé et le système selon l'invention peuvent notamment être utilisés :
- dans le domaine de l'automobile (voitures virtuelles sur routes réelles).
- dans le domaine du Prototypage (visualisation de prototypes virtuels dans des décors réels).
- dans le domaine de l'architecture (visualisation de bâtiments virtuels dans des paysage réels).
- dans le domaine du guidage temps réel : affichage d'informations pour diriger un pilote ou un conducteur.

### Applications dans le domaine du marketing ou de la communication

Le procédé et le système selon l'invention peuvent notamment être utilisés pour effectuer des études de marchés : affichage de produits non encore réellement réalisés dans des situations réelles (ex : nouveau mobile GSM, nouvelle voiture).

Le procédé et le système selon l'invention peuvent notamment être utilisés pour réaliser des images interactives dans boutiques ou des centres commerciaux.

Applications industrielles dans le domaine des technologies de l'information.

Le procédé et le système selon l'invention peuvent notamment être utilisés pour des visioconférences : visiophone avec possibilité d'insérer et d'interagir avec des objets virtuels.

### Applications industrielles dans le domaine des loisirs

Le procédé et le système selon l'invention peuvent notamment être utilisés dans des parcs d'attractions : animations visuelles temps réelles (ex : miroirs interactifs).

## Revendications

1. Procédé permettant à un utilisateur :
(i) de produire dans une unité de traitement informatique (2), composée de circuits électroniques standard, un flux d'images de synthèse (3), et
(ii) de tracer une scène (4) en créant des interactions visuelles entre ledit flux d'images de synthèse (3) et au moins un flux d'images vidéo (5),
de manière à améliorer la qualité de la scène (4) et diminuer le temps de traitement ;
ladite unité de traitement informatique (2) comprenant :
- une carte mère (7),
- une carte graphique (8) de rendu et d'affichage de ladite scène (4), comportant un processeur d'accélération des traitements 2D/3D (9), au moins une zone mémoire incluant un buffer de travail (10) ("back buffer") et une mémoire de texture (11),
- un moyen d'acquisition (12) permettant d'acquérir, en temps réel, des images vidéo (13), dans un buffer vidéo (14) ; ledit moyen d'acquisition (12) se présentant notamment sous la forme :
* d'une acquisition vidéo intégrée à ladite carte graphique (8), et/ou
* d'une acquisition vidéo intégrée à ladite carte mère (7), et/ou
* d'une acquisition vidéo, via une carte d'acquisition dédiée ;
ledit procédé comprenant l'étape d'effectuer un rendu spécifique de ladite scène (4),
- en créant, préalablement au rendu spécifique, une texture dédiée (19) dans ladite mémoire de texture (11) de ladite carte graphique (8) ; ladite texture dédiée (19) ayant la taille dudit buffer vidéo (14) ; ladite texture dédiée (19) étant dédiée pour recopier ledit buffer vidéo (14) dans ladite mémoire de texture (11) ;
- en recopiant, lors de chaque rendu de ladite scène (4), ledit buffer vidéo (14) dans ladite texture dédiée (19),
- en traçant lesdites images de synthèse (16) dans ledit buffer de travail (10) de la carte graphique (8) et en traçant complètement ladite scène (4), en utilisant ladite texture dédiée (19) pour texturer certains des polygones (20) de ladite scène (4).

2. Procédé selon la revendication précédente ; ledit buffer vidéo (14) comportant des lignes vidéo entrelacées ; pour recopier, lors de chaque rendu de ladite scène (4), dans ladite texture dédiée (19) ledit procédé comprenant :
- l'étape de recopier lesdites lignes vidéo paires (17), lors d'un premier rendu, puis
- l'étape de recopier lesdites lignes vidéo impaires (18), lors du rendu suivant,
- l'étape d'appliquer une translation du buffer vidéo (14) de plus ou moins une demi-ligne dans le rendu de ladite scène (4) :
* soit en modifiant les coordonnées de texture de la texture dédiée (19),
* soit en modifiant les coordonnées des polygones (20) texturés par la texture dédiée (19).

3. Procédé selon la revendication 1 ou la revendication 2 ; ledit moyen d'acquisition (12) comportant un driver (22) présentant un nouveau buffer vidéo (14) pour chaque nouvelle image vidéo ; le rendu de ladite scène (4) étant effectué de manière synchrone avec la présentation de chaque nouveau buffer vidéo (14).

4. Procédé selon la revendication 1 ou la revendication 2 ; ledit moyen d'acquisition (12) comportant un driver (22) présentant un nouveau buffer vidéo (14) pour chaque nouvelle image vidéo ; ledit procédé comprenant les étapes suivantes :
- l'étape de remplir une mémoire tampon (23) avec chaque nouveau buffer vidéo, en mettant en oeuvre une unité d'exécution (24) (« thread ») de capture vidéo,
- l'étape de recopier un des buffer vidéo (14) contenu dans ladite mémoire tampon (23) vers ladite mémoire de texture (11) de la carte graphique (8),
- l'étape d'effectuer le rendu de ladite scène (4) de manière asynchrone par rapport à la présentation de chaque nouveau buffer vidéo (14).

5. Procédé selon l'une quelconque des revendications 1 à 4 ; ledit procédé comprenant l'étape d'appliquer une fonction anti-aliasing lors du tracé de ladite scène (4).

6. Procédé selon l'une quelconque des revendications 1 à 5 ; ledit procédé comprenant l'étape d'appliquer une fonction transparence lors du tracé de ladite scène (4).

7. Procédé selon l'une quelconque des revendications 1 à 6 ; ledit procédé comprenant l'étape d'appliquer des déformations non linéaires au buffer vidéo (14) en texturant des polygones (20) de ladite scène (4) au moyen de ladite texture dédiée (19).

8. Procédé selon l'une quelconque des revendications 1 à 7 ; ledit procédé comprenant l'étape d'appliquer au buffer vidéo (14) des fonctions pixel shaders permettant, notamment, un traitement du type chroma key.

9. Procédé selon l'une quelconque des revendications 1 à 8 ; ladite unité de traitement informatique (2) comprenant deux moyens d'acquisition (12) ayant chacun un buffer vidéo (14) ; ledit procédé comprenant les étapes suivantes :
- l'étape de recopier le buffer vidéo (14) de l'un desdits moyens d'acquisition (12) dans une seconde texture dédiée de la carte graphique (8),
- l'étape de texturer au moins en partie ladite scène (4) en utilisant ladite seconde texture dédiée.

10. Procédé selon l'une quelconque des revendications 1 à 9 ; ledit procédé comprenant :
- l'étape de retarder la recopie d'un des buffer vidéo (14) contenu dans une mémoire tampon (23) vers ladite mémoire de texture (11) de la carte graphique (8).

11. Système permettant à un utilisateur :
(i) de produire dans une unité de traitement informatique (2), composée de circuits électroniques standard, un flux d'images de synthèse (3), et
(ii) de tracer une scène (4) en créant des interactions visuelles entre ledit flux d'images de synthèse (3) et au moins un flux d'images vidéo (5),
de manière à améliorer la qualité de la scène (4) et diminuer le temps de traitement ;
ladite unité de traitement informatique (2) comportant :
- une carte mère (7),
- une carte graphique (8) de rendu et d'affichage de ladite scène (4), comportant un processeur d'accélération des traitements 2D/3D (9), au moins une zone mémoire incluant un buffer de travail (10) (« back buffer ») et une mémoire de texture (11),
- un moyen d'acquisition (12) permettant d'acquérir, en temps réel, des images vidéo (13), dans un buffer vidéo (14) ; ledit moyen d'acquisition (12) se présentant notamment sous la forme :
* d'une acquisition vidéo intégrée à ladite carte graphique (8), et/ou
* d'une acquisition vidéo intégrée à ladite carte mère (7), et/ou
* d'une acquisition vidéo, via une carte d'acquisition dédiée ;
pour effectuer un rendu spécifique de ladite scène (4) :
- ladite carte mère (7) comportant en outre des moyens de traitement informatique (26) comprenant des moyens d'initialisation (32) créant, préalablement au rendu spécifique, une texture dédiée (19) dans ladite mémoire de texture (11) de ladite carte graphique (8) ; ladite texture dédiée (19) ayant la taille dudit buffer vidéo (14) ;
- lesdits moyens de traitement informatique (26) comprenant en outre des premiers moyens de recopie (33) pour recopier ledit buffer vidéo (14) dans ladite texture dédiée (19) ;
- ledit processeur d'accélération des traitements 2D/3D (9) comportant des moyens de traçage pour tracer lesdites images de synthèse (16) dans ledit buffer de travail (10) de ladite carte graphique (8) et des premiers moyens de calcul (34) pour tracer complètement ladite scène (4), en utilisant ladite texture dédiée (19) pour texturer certains des polygones (20) de ladite scène (4).

12. Système selon la revendication précédente ; ledit buffer vidéo (14) comportant des lignes vidéo entrelacées ; lesdits premiers moyens de recopie (33) dudit buffer vidéo (14) dans ladite texture dédiée (19) comprenant :
- des premiers moyens de sélection et de recopie (35) desdites lignes vidéo paires (17), lors d'un premier rendu, puis
- des seconds moyens de sélection et de recopie (36) desdites lignes vidéo impaires (18), lors du rendu suivant,
- des seconds moyens de calcul (37) pour appliquer une translation (21) du buffer vidéo (14) de plus ou moins une demi-ligne dans le rendu de ladite scène (4) :
* soit en modifiant les coordonnées de texture de ladite texture dédiée (19),
* soit en modifiant les coordonnées des polygones (20) texturés par ladite texture dédiée (19).

13. Système selon la revendication 11 ou la revendication 12 ; ledit moyen d'acquisition (12) comportant un driver (22) présentant un nouveau buffer vidéo (14) pour chaque nouvelle image vidéo ; lesdits moyens de traitement informatique (26) effectuant le rendu de ladite scène (4) de manière synchrone avec la présentation de chaque nouveau buffer vidéo (14).

14. Système selon la revendication 11 ou la revendication 12 ; ledit moyen d'acquisition (12) comportant un driver (22) présentant un nouveau buffer vidéo (14) pour chaque nouvelle image vidéo ; lesdits moyens de traitement informatique (26) comprenant :
- des moyens de transfert pour remplir une mémoire tampon (23) avec chaque nouveau buffer vidéo (14), en mettant en oeuvre une unité d'exécution (24) (« thread ») de capture vidéo,
- des seconds moyens de recopie pour recopier (38) un des buffer vidéo (14) contenu dans ladite mémoire tampon (23) vers ladite mémoire de texture (11) de la carte graphique (8) ;
lesdits moyens de traitement informatique (26) effectuant le rendu de ladite scène (4) de manière asynchrone par rapport à la présentation de chaque nouveau buffer vidéo (14).

15. Système selon l'une quelconque des revendications 11 à 14 ; lesdits moyens de traitement informatique (26) permettant d'appliquer une fonction anti-aliasing lors du tracé de ladite scène (4).

16. Système selon l'une quelconque des revendications 11 à 15 ; lesdits moyens de traitement informatique (26) permettant d'appliquer une fonction transparence lors du tracé de ladite scène (4).

17. Système selon l'une quelconque des revendications 11 à 16 ; lesdits moyens de traitement informatique (26) permettant d'appliquer des déformations non linéaires au buffer vidéo (14) en texturant des polygones (20) de ladite scène (4) au moyen de ladite texture dédiée (19).

18. Système selon *l'une* quelconque des revendications 11 à 17; lesdits moyens de traitement informatique (26) permettant d'appliquer au buffer vidéo (14) des fonctions pixel shaders permettant, notamment, un traitement du type chroma key.

19. Système selon l'une quelconque des revendications 11 à 18 ; ladite unité de traitement informatique (2) comprenant deux moyens d'acquisition ayant chacun un buffer vidéo (14) ; lesdits moyens de traitement informatique (26) permettant de recopier le buffer vidéo (14) de l'un desdits moyens d'acquisition dans une seconde texture dédiée de la carte graphique (8),
ledit processeur d'accélération de traitement 2D/3D (9) permettant de texturer au moins en partie ladite scène (4) en utilisant ladite seconde texture dédiée.

20. Système selon l'une quelconque des revendications 11 à 19 ; lesdits moyens de traitement informatique (26) permettant de retarder la recopie d'un des buffer vidéo (14) contenu dans une mémoire tampon (23) vers ladite mémoire de texture (151) de la carte graphique (8).

## Claims

1. Method allowing a user:
(i) to produce in a computer processing unit (2), composed of standard electronic circuits, a stream of synthetic images (3), and
(ii) to draw a scene (4) by creating visual interactions between said stream of synthetic images (3) and at least one stream of video images (5),
so as to improve the quality of the scene (4) and decrease the processing time;
said computer processing unit (2) comprising:
- a mother card (7),
- a graphics card (8) for rendering and displaying said scene (4), comprising an acceleration processor for the 2D/3D processings (9), at least one memory area including a work buffer (10) ("back buffer") and a texture memory (11),
- an acquisition means (12) making it possible to acquire, in real time, video images (13), in a video buffer (14); said acquisition means (12) taking in particular the form of:
* a video acquisition integrated into said graphics card (8), and/or
* a video acquisition integrated into said mother card (7), and/or
* a video acquisition, via a dedicated acquisition card;
said method comprising the step of performing a specific rendition of said scene (4),
- by creating, prior to the specific rendition, a dedicated texture (19) in said texture memory (11) of said graphics card (8); said dedicated texture (19) having the size of said video buffer (14); said dedicated texture (19) being dedicated to copying said video buffer (14) into said texture memory (11);
- by copying, during each rendition of said scene (4), said video buffer (14) into said dedicated texture (19),
- by drawing said synthetic images (16) in said work buffer (10) of the graphics card (8) and by completely drawing said scene (4), by using said dedicated texture (19) to texture some of the polygons (20) of said scene (4).

2. Method according to the preceding claim; said video buffer (14) comprising interlaced video lines; for copying, during each rendition of said scene (4), into said dedicated texture (19) said method comprising:
- the step of copying said even video lines (17), during a first rendition, and then
- the step of copying said odd video lines (18), during the next rendition,
- the step of applying a translation of the video buffer (14) of more or less a half-line in the rendition of said scene (4):
* either by modifying the texture coordinates of the dedicated texture (19),
* or by modifying the coordinates of the polygons (20) textured by the dedicated texture (19).

3. Method according claim 1 or claim 2; said acquisition means (12) comprising a driver (22) presenting a new video buffer (14) for each new video image; the rendition of said scene (4) being performed in a manner synchronous with the presentation of each new video buffer (14).

4. Method according to claim 1 or claim 2; said acquisition means (12) comprising a driver (22) presenting a new video buffer (14) for each new video image; said method comprising the following steps:
- the step of filling a buffer memory (23) with each new video buffer, by employing a video capture ("thread") execution unit (24),
- the step of copying one of the video buffers (14) contained in said buffer memory (23) to said texture memory (11) of the graphics card (8),
- the step of performing the rendition of said scene (4) in an asynchronous manner with respect to the presentation of each new video buffer (14).

5. Method according to any one of claims 1 to 4; said method comprising the step of applying an anti-aliasing function during the drawing of said scene (4).

6. Method according to any one of claims 1 to 5; said method comprising the step of applying a transparency function during the drawing of said scene (4).

7. Method according to any one of claims 1 to 6; said method comprising the step of applying non-linear deformations to the video buffer (14) by texturing some polygons (20) of said scene (4) by means of said dedicated texture (19).

8. Method according to any one of claims 1 to 7; said method comprising the step of applying pixel shader functions to the video buffer (14), thus allowing, in particular, processing of the chroma key type.

9. Method according to any one of claims 1 to 8; said computer processing unit (2) comprising two acquisition means (12) each having a video buffer (14); said method comprising the following steps:
- the step of copying the video buffer (14) of one of said acquisition means (12) into a second dedicated texture of the graphics card (8),
- the step of texturing at least in part said scene (4) by using said second dedicated texture.

10. Method according to any one of claims 1, to 9; said method comprising:
- the step of delaying the copying of one of the video buffers (14) contained in a buffer memory (23) to said texture memory (11) of the graphics card (8).

11. System allowing a user:
(i) to produce in a computer processing unit (2), composed of standard electronic circuits, a stream of synthetic images (3), and
(ii) to draw a scene (4) by creating visual interactions between said stream of synthetic images (3) and at least one stream of video images (5),
so as to improve the quality of the scene (4) and decrease the processing time;
said computer processing unit (2) comprising:
- a mother card (7),
- a graphics card (8) for rendering and displaying said scene (4), comprising an acceleration processor for the 2D/3D processings (9), at least one memory area including a work buffer (10) ("back buffer") and a texture memory (11),
- an acquisition means (12) making it possible to acquire, in real time, video images (13), in a video buffer (14); said acquisition means (12) taking in particular the form of:
* a video acquisition integrated into said graphics card (8), and/or
* a video acquisition integrated into said mother card (7), and/or
* a video acquisition, via a dedicated acquisition card;
so as to perform a specific rendition of said scene (4) :
- said mother card (7) furthermore comprising computer processing means (26) comprising initialisation means (32) creating, prior to the specific rendition, a dedicated texture (19) in said texture memory (11) of said graphics card (8); said dedicated texture (19) having the size of said video buffer (14);
- said computer processing means (26) furthermore comprising first copying means (33) for copying said video buffer (14) into said dedicated texture (19);
- said acceleration processor for the 2D/3D processings (9) comprising drawing means for drawing said synthetic images (16) in said work buffer (10) of said graphics card (8) and first calculation means (34) for completely drawing said scene (4), by using said dedicated texture (19) to texture some of the polygons (20) of said scene (4).

12. System according to the preceding claim; said video buffer (14) comprising interlaced video lines; said first copying means (33) for copying said video buffer (14) into said dedicated texture (19) comprising:
- first selection and copying means (35) for selecting and copying said even video lines (17), during a first rendition, and then
- second selection and copying means (36) for selecting and copying said odd video lines (18), during the following rendition
- second calculation means (37) for applying a translation (21) of the video buffer (14) of more or less a half-line in the rendition of said scene (4):
* either by modifying the texture coordinates of said dedicated texture (19),
* or by modifying the coordinates of the polygons (20) textured by said dedicated texture (19).

13. System according to claim 11 or claim 12; said acquisition means (12) comprising a driver (22) presenting a new video buffer (14) for each new video image; said computer processing means (26) performing the rendition of said scene (4) in a manner synchronous with the presentation of each new video buffer (14).

14. System according to claim 11 or claim 12; said acquisition means (12) comprising a driver (22) presenting a new video buffer (14) for each new video image; said computer processing means (26) comprising:
- transfer means for filling a buffer memory (23) with each new video buffer (14), by implementing a video capture ("thread") execution unit (24),
- second copying means for copying (38) one of the video buffers (14) contained in said buffer memory (23) to said texture memory (11) of the graphics card (8);
said computer processing means (26) performing the rendition of said scene (4) in an asynchronous manner with respect to the presentation of each new video buffer (14).

15. System according to any one of claims 11 to 14; said computer processing means (26) making it possible to apply an anti-aliasing function during the drawing of said scene (4).

16. System according to any one of claims 11 to 15; said computer processing means (26) making it possible to apply a transparency function during the drawing of said scene (4).

17. System according to any one of claims 11 to 16; said computer processing means (26) making it possible to apply non-linear deformations to the video buffer (14) by texturing some polygons (20) of said scene (4) by means of said dedicated texture (19).

18. System according to any one of claims 11 to 17; said computer processing means (26) making it possible to apply pixel shader functions to the video buffer (14), thus allowing, in particular, a processing of the chroma key type.

19. System according to any one of claims 11 to 18; said computer processing unit (2) comprising two acquisition means each having a video buffer (14); said computer processing means (26) making it possible to copy the video buffer (14) of one of said acquisition means into a second dedicated texture of the graphics card (8),
said 2D/3D processing acceleration processor (9) making it possible to texture at least in part said scene (4) by using said second dedicated texture.

20. System according to any one of claims 11 to 19; said computer processing means (26) making it possible to delay the copying of one of the video buffers (14) contained in a buffer memory (23) to said texture memory (151) of the graphics card (8).

## Patentansprüche

1. Verfahren, das einem Benutzer gestattet:
(i) in einer Datenverarbeitungseinheit (2), die aus elektronischen Standardschaltungen zusammengesetzt ist, einen Fluss von Synthesebildern (3) zu erzeugen und
(ii) eine Szene (4) zu zeichnen, indem visuelle Interaktionen zwischen dem Fluss von Synthesebildern (3) und mindestens einem Fluss von Videobildern (5) erzeugt werden,
so dass die Qualität der Szene (4) verbessert wird und die Verarbeitungszeit verringert wird;
wobei die Datenverarbeitungseinheit (2) umfasst:
- eine Hauptplatine (7),
- eine Grafikkarte (8) zur Darstellung und Anzeige der Szene (4), die einen Prozessor (9) zur Beschleunigung der 2D/3D-Verarbeitungen, mindestens eine einen Arbeitspuffer (10) ("back buffer") einschließende Speicherzone und einen Texturspeicher (11) umfasst,
- ein Erfassungsmittel (12), das es gestattet, in Echtzeit Videobilder (13) in einem Videopuffer (14) zu erfassen; wobei das Erfassungsmittel (12) insbesondere vorliegt in der Form:
* einer in die Grafikkarte (8) integrierten Videoerfassung und/oder
* einer in die Hauptplatine (7) integrierten Videoerfassung und/oder
* einer Videoerfassung über eine dedizierte Erfassungskarte;
wobei das Verfahren den Schritt der Durchführung einer spezifischen Darstellung der Szene (4) umfasst,
- indem vor der spezifischen Darstellung eine dedizierte Textur (19) in dem Texturspeicher (11) der Grafikkarte (8) erzeugt wird; wobei die dedizierte Textur (19) die Größe des Videopuffers (14) besitzt; wobei die dedizierte Textur (19) der Umgruppierung des Videopuffers (14) in den Texturspeicher (11) dediziert ist;
- indem der Videopuffer (14) bei jeder Darstellung der Szene (4) in die dedizierte Textur (19) umkopiert wird,
- indem die Synthesebilder (16) in dem Arbeitspuffer (10) der Grafikkarte (8) gezeichnet werden und indem die Szene (4) vollständig gezeichnet wird, indem die dedizierte Textur (19) verwendet wird, um manche der Polygone (20) der Szene (4) zu texturieren.

2. Verfahren nach dem vorhergehenden Anspruch; wobei der Videopuffer (14) verschränkte Videozeilen umfasst; um bei jeder Darstellung der Szene (4) in die dedizierte Textur (19) umzukopieren, wobei dieses Verfahren umfasst:
- den Schritt des Umkopierens der geradzahligen Videozeilen (17) bei einer ersten Darstellung, dann
- den Schritt des Umkopierens der ungeradzahligen Videozeilen (18) bei der folgenden Darstellung,
den Schritt des Anlegens einer Translation des Videopuffers (14) um mehr oder weniger eine halbe Zeile in der Darstellung der Szene (4):
* entweder indem die Texturkoordinaten der dedizierten Textur (19) geändert werden;
* oder indem die Koordinaten der durch die dedizierte Textur (19) texturierten Polygone (20) geändert werden.

3. Verfahren nach Anspruch 1 oder Anspruch 2; wobei die Erfassungsmittel (12) einen Treiber (22) umfassen, der einen neuen Videopuffer (14) für jedes neue Videobild aufweist; wobei die Darstellung der Szene (4) synchron mit der Präsentation jedes neuen Videopuffers (14) durchgeführt wird.

4. Verfahren nach Anspruch 1 oder Anspruch 2; wobei das Erfassungsmittel (12) einen Treiber (22) umfasst, der einen neuen Videopuffer (14) für jedes neue Videobild aufweist; wobei das Verfahren die folgenden Schritte umfasst:
- den Schritt des Füllens eines Pufferspeichers (23) mit jedem neuen Videopuffer, indem eine Video-Capture-Ausführungseinheit (24) ("thread") eingesetzt wird,
- den Schritt des Umkopierens eines der in dem Pufferspeicher (23) enthaltenen Videopuffer (14) in den Texturspeicher (11) der Grafikkarte (8),
- den Schritt der Durchführung der Darstellung der Szene (4) asynchron bezüglich der Präsentation jedes neuen Videopuffers (14).

5. Verfahren nach einem der Ansprüche 1 bis 4; wobei das Verfahren den Schritt des Anlegens einer Anti-Aliasing-Funktion bei dem Zeichnen der Szene (4) umfasst.

6. Verfahren nach einem der Ansprüche 1 bis 5; wobei das Verfahren den Schritt des Anlegens einer Transparenzfunktion beim Zeichnen der Szene (4) umfasst.

7. Verfahren nach einem der Ansprüche 1 bis 6; wobei das Verfahren den Schritt des Anlegens von nichtlinearen Deformationen an den Videopuffer (14) umfasst, indem Polygone (20) der Szene (4) mit Hilfe der dedizierten Textur (19) texturiert werden.

8. Verfahren nach einem der Ansprüche 1 bis 7; wobei das Verfahren den Schritt des Anlegens von Pixel-Shader-Funktionen an den Videopuffer (14) umfasst, die insbesondere eine Bearbeitung vom Typ Chroma-Key gestatten.

9. Verfahren nach einem der Ansprüche 1 bis 8; wobei die Datenverarbeitungseinheit (2) zwei Erfassungsmittel (12) umfasst, die jeweils einen Videopuffer (14) haben; wobei das Verfahren die folgenden Schritte umfasst:
- den Schritt des Umkopierens des Videopuffers (14) eines der Erfassungsmittel (12) in eine zweite dedizierte Textur der Grafikkarte (8),
- den Schritt des mindestens partiellen Texturierens der Szene (4), indem die zweite dedizierte Textur verwendet wird.

10. Verfahren nach einem der Ansprüche 1 bis 9; wobei das Verfahren umfasst:
- den Schritt des Verzögerns der Umkopie eines der in einem Pufferspeicher (23) enthaltenen Videopuffer (14) in den Texturspeicher (11) der Grafikkarte (8).

11. System, das einem Benutzer gestattet:
(i) in einer Datenverarbeitungseinheit (2), die aus elektronischen Standardschaltungen zusammengesetzt ist, einen Fluss von Synthesebildern (3) zu erzeugen und
(ii) eine Szene (4) zu zeichnen, indem visuelle Interaktionen zwischen dem Fluss von Synthesebildern (3) und mindestens einem Fluss von Videobildern (5) erzeugt werden,
so dass die Qualität der Szene (4) verbessert wird und die Verarbeitungszeit verringert wird;
wobei die Datenverarbeitungseinheit (2) umfasst:
- eine Hauptplatine (7),
- eine Grafikkarte (8) zur Darstellung und Anzeige der Szene (4), die einen Prozessor zur Beschleunigung der 2D/3D-Verarbeitungen (9), mindestens eine einen Arbeitspuffer (10) ("back buffer") einschließende Speicherzone und einen Texturspeicher (11) umfasst,
- ein Erfassungsmittel (12), das es gestattet, in Echtzeit Videobilder (13) in einem Videopuffer (14) zu erfassen; wobei das Erfassungsmittel (12) insbesondere vorliegt in der Form:
* einer in die Grafikkarte (8) integrierten Videoerfassung und/oder
* einer in die Hauptplatine (7) integrierten Videoerfassung und / oder
* einer Videoerfassung über eine dedizierte Erfassungskarte;
zur Durchführung einer spezifischen Darstellung der Szene (4):
- wobei die Hauptplatine (7) außerdem Datenverarbeitungsmittel (26) umfasst, die Initialisierungsmittel (32) umfassen, die vor der spezifischen Darstellung eine dedizierte Textur (19) in dem Texturspeicher (11) der Grafikkarte (8) erzeugen; wobei diese dedizierte Textur (19) die Größe des Videopuffers (14) hat;
- wobei die Datenverarbeitungsmittel (26) außerdem erste Umkopiermittel (33) zum Umkopieren des Videopuffers (14) in die dedizierte Textur (19) umfassen;
- wobei der Prozessor (9) zur Beschleunigung der 2D/3D-Verarbeitungen Zeichenmittel umfasst, um diese Synthesebilder (16) in dem Arbeitspuffer (10) der Grafikkarte (8) zu zeichnen, und erste Rechenmittel (34), um die Szene (4) vollständig zu zeichnen, indem die dedizierte Textur (19) verwendet wird, um manche der Polygone (20) der Szene (4) zu texturieren.

12. System nach dem vorhergehenden Anspruch; wobei der Videopuffer (14) verschränkte Videozeilen umfasst; wobei die ersten Mittel (33) zum Umkopieren des Videopuffers (14) in die dedizierte Textur (19) umfassen:
- erste Mittel (35) zur Selektion und zum Umkopieren der geradzahligen Videozeilen (17) bei einer ersten Darstellung, und dann
- zweite Mittel (36) zur Selektion und zum Umkopieren der ungeradzahligen Videozeilen (18) bei der folgenden Darstellung:
- zweite Rechenmittel (37), um eine Translation (21) des Videopuffers (14) mehr oder weniger um eine halbe Zeile in der Darstellung der Szene (4) anzulegen:
* entweder indem die Texturkoordinaten der dedizierten Textur (19) geändert werden,
* oder indem die Koordinaten der durch die dedizierte Textur (19) texturierten Polygone (20) geändert werden.

13. System nach Anspruch 11 oder Anspruch 12; wobei die Erfassungsmittel (12) einen Treiber (22) umfassen, der einen neuen Videopuffer (14) für jedes neue Videobild aufweist; wobei die Datenverarbeitungsmittel (26) die Darstellung dieser Szene (4) synchron mit der Präsentation jedes neuen Videopuffers (14) durchführen.

14. System nach Anspruch 11 oder Anspruch 12; wobei die Erfassungsmittel (12) einen Treiber (22) umfassen, der einen neuen Videopuffer (14) für jedes neue Videobild aufweist; wobei die Datenverarbeitungsmittel (26) umfassen:
- Transfermittel, um einen Pufferspeicher (23) mit jedem neuen Videopuffer (14) zu füllen, indem eine Video-Capture-Ausführungseinheit (24) ("thread") eingesetzt wird,
- zweite Umkopiermittel (38), um einen der in dem Pufferspeicher (23) enthaltenen Videopuffer (14) in den Texturspeicher (11) der Grafikkarte (8) umzukopieren;
- wobei die Datenverarbeitungsmittel (26) die Darstellung dieser Szene (4) asynchron bezüglich der Präsentation jedes neuen Videopuffers (14) ausführen.

15. System nach einem der Ansprüche 11 bis 14; wobei die Datenverarbeitungsmittel (26) das Anlegen einer Anti-Aliasing-Funktion bei dem Zeichnen der Szene (4) gestatten.

16. System nach einem der Ansprüche 11 bis 15; wobei die Datenverarbeitungsmittel (26) das Anlegen einer Transparenzfunktion bei dem Zeichnen der Szene (4) gestatten.

17. System nach einem der Ansprüche 11 bis 16; wobei die Datenverarbeitungsmittel (26) das Anlegen von nichtlinearen Deformationen an den Videopuffer (14) gestatten, indem sie Polygone (20) der Szene (4) mit Hilfe der dedizierten Textur (19) texturieren.

18. System nach einem der Ansprüche 11 bis 17; wobei die Datenverarbeitungsmittel (26) das Anlegen an den Videopuffer (14) von Pixel-Shader-Funktionen gestatten, die insbesondere eine Verarbeitung vom Typ Chroma-Key gestatten.

19. System nach einem der Ansprüche 11 bis 18; wobei die Datenverarbeitungseinheit (2) zwei Erfassungsmittel umfasst, die jeweils einen Videopuffer (14) haben; wobei die Datenverarbeitungsmittel (26) das Umkopieren des Videopuffers (14) eines der Erfassungsmittel in eine zweite dedizierte Textur der Grafikkarte (8) gestatten,
wobei der Prozessor zur Beschleunigung der 2D/3D-Verarbeitung (9) es gestattet, die Szene (4) mindestens zum Teil zu texturieren, indem die zweite Textur verwendet wird.

20. System nach einem der Ansprüche 11 bis 19; wobei die Datenverarbeitungsmittel (26) es gestatten, die Umkopie eines der in einem Pufferspeicher (23) enthaltenen Videopuffer (14) in den Texturspeicher (151) der Grafikkarte (8) zu verzögern.
